# EUROPEAN PATENT SPECIFICATION

(11) **EP 3 324 046 B1**
(45) Date of publication and mention of the grant of the patent: **07.11.2018**
(21) Application number: 17158149.9
(22) Date of filing: 27.02.2017
(51) Int. Cl.: F04B 11/00, F04B 17/02, F04B 53/10, F03C 1/26

(54) **HYDRAULIC MACHINE AND RENEWABLE ENERGY TYPE POWER GENERATING APPARATUS**
HYDRAULIKMASCHINE UND VORRICHTUNG ZUR STROMERZEUGUNG AUS ERNEUERBAREN ENERGIEN
MACHINE HYDRAULIQUE ET APPAREIL DE GÉNÉRATION DE PUISSANCE DE TYPE À ÉNERGIE RENOUVELABLE

(30) Priority: 17.11.2016 JP 2016224587
(43) Date of publication of application: 23.05.2018
(73) Proprietor: Mitsubishi Heavy Industries, Ltd., Tokyo 108-8215 (JP); Artemis Intelligent Power Limited, Loanhead, Midlothian EH20 9TB (GB)
(72) Inventor: Kawabata, Shinji, Tokyo, 108-8215 (JP); Noguchi, Toshihide, Tokyo, 108-8215 (JP); Lavender, Jack, Loanhead, Midlothian, Lothian EH20 9TB (GB); Dodson, Henry, Loanhead, Midlothian, Lothian EH20 9TB (GB)
(74) Representative: Henkel, Breuer & Partner

(56) References cited:
- EP-A1- 2 770 203
- EP-A1- 2 820 293
- JP-A- 2014 129 777

## Description

### TECHNICAL FIELD

The present disclosure relates to a hydraulic machine and a renewable energy type power generating apparatus.

### BACKGROUND ART

Hydraulic machines such as a hydraulic pump and a hydraulic motor have been known.

For example, in a hydraulic machine described in US 2010/0040470 A1, periodical change in a volume of a working chamber, defined by a cylinder and a piston, is utilized to achieve conversion between fluid energy of working fluid and rotational energy of a rotor shaft.

In a hydraulic machine described in JP 2014-163375 A, the working oil flowing in and out from a working chamber is controlled with a high pressure valve and a low pressure valve provided between the working chamber and a high pressure hydraulic line and a low pressure hydraulic line of the hydraulic machine.

JP 2014-129777 A discloses a hydraulic machine with the features of the preamble portion of claim 1. In this hydraulic machine supply passage and discharge passage for the high and low pressure fluid are both disposed inside a cylinder block body and sealed from a cam chamber of the hydraulic machine.

### SUMMARY

The present inventors have found that when the low pressure valve is closed while the working oil is flowing in the hydraulic machine with a long or asymmetrical passage on a downstream side of the low pressure valve, cavitation occurs due to sharp pressure drop and is followed by surge pressure as a result of pressure recovery. Furthermore, a flow in the downstream side passage may be uneven. Thus, components of the hydraulic machine might be damaged due to pressure fluctuation (pressure spike) in the low pressure hydraulic line.

In view of the above, an object of at least some embodiments of the present invention is to provide a hydraulic machine and a renewable energy type power generating apparatus in which pressure fluctuation in a low pressure hydraulic line can be suppressed.
(1) A hydraulic machine according to the present invention includes the features of claim 1 comprising: a rotor shaft; a cylinder provided along a radial direction of the rotor shaft; a piston forming a hydraulic chamber together with the cylinder, the piston being configured to be guided by the cylinder so as to be reciprocally movable along the radial direction in the cylinder; a cam disposed in a cam chamber which is located on an inner side in the radial direction with respect to the cylinder, the cam being configured to rotate together with the rotor shaft in conjunction with a reciprocating motion of the piston; a low pressure hydraulic line and a high pressure hydraulic line which are communicable with the hydraulic chamber; a low pressure valve disposed between the cylinder and the low pressure hydraulic line for switching a communication state between the hydraulic chamber and the low pressure hydraulic line; and a high pressure valve disposed between the cylinder and the high pressure hydraulic line for switching a communication state between the hydraulic chamber and the high pressure hydraulic line. The low pressure hydraulic line includes the cam chamber. The hydraulic machine further comprises a low pressure passage having a first end opening to the cam chamber and a second end located on a side of the low pressure valve. The first end of the low pressure passage is located at a radial position between a radial position of the second end of the low pressure passage and a radial position of a center of the rotor shaft.

In the configuration (1), the low pressure hydraulic line, communicable with the hydraulic chamber, includes the cam chamber, and the hydraulic chamber communicates with the cam chamber forming at least a part of the low pressure hydraulic line, through the low pressure passage. Thus, for example, a shorter passage (the low pressure passage in the configuration (1)) between the hydraulic chamber and the low pressure hydraulic line can be achieved, compared with a configuration in which an internal flow path in the casing of the hydraulic machine communicates with the low-pressure external pipe (low pressure hydraulic line) connected to the outer surface of the casing. Thus, cavitation occurring on the downstream side of the low pressure valve in the operation of closing the low pressure valve is reduced, and pressure fluctuation (pressure spike) in the low pressure hydraulic line can be suppressed.

With the pressure fluctuation in the low pressure hydraulic line suppressed as described above, an accumulator for reducing the pressure fluctuation in the low pressure hydraulic line can be omitted, whereby the hydraulic machine can have a simple configuration.
(2) In some embodiments, in the configuration (1), the low pressure valve includes a valve body and a valve seat on which the valve body is to seat, the valve body is located farther in the radial direction from the cylinder than the valve seat, and the hydraulic machine is configured such that in a region on a rotor shaft side of the valve seat, a radial component of a flow of working oil between the hydraulic chamber and the low pressure valve and a radial component of a flow of working oil through the low pressure passage are opposite to each other in the radial direction.

In the configuration (2), the flow of the working oil toward the low pressure valve from the hydraulic chamber is reversed so that the working oil is guided toward the cam chamber in the low pressure passage, whereby an even shorter low pressure passage can be achieved between the hydraulic chamber and the low pressure hydraulic line. Thus, cavitation occurring on the downstream side of the low pressure valve in the operation of closing the low pressure valve is effectively reduced, and pressure fluctuation (pressure spike) in the low pressure hydraulic line can be more effectively suppressed.
(3) In some embodiments, in the configuration (1) or (2), the low pressure valve includes a valve body and a valve seat on which the valve body is to seat, and the valve seat is disposed on an outer circumferential side of the cylinder about a central axis of the hydraulic chamber.

In the configuration (3), with the valve seat of the low pressure valve provided on the outer circumferential side of the cylinder, it is more likely to achieve a symmetrical flow of the working oil via the valve seat of the low pressure valve, about the central axis of the hydraulic chamber, whereby loss and pressure fluctuation due to asymmetrical flow can be suppressed.
(4) In some embodiments, in any one of the configurations (1) to (3), the low pressure passage is provided so as to be symmetrical about a central axis of the hydraulic chamber.

In the configuration (4), the low pressure passage is provided so as to be symmetrical about the central axis of the hydraulic chamber. Thus, the symmetrical flow between the low pressure passage and the hydraulic chamber can be achieved, whereby the loss and the pressure fluctuation due to the asymmetrical flow can be suppressed.
(5) In some embodiments, in any one of the configurations (1) to (4), the low pressure passage includes: an annular channel portion provided on an outer circumferential side of the cylinder about a central axis of the hydraulic chamber; and a plurality of branch channel portions branching from the annular channel portion and extending from the annular channel portion toward the cam chamber.

In the configuration (5), the low pressure passage includes: the annular channel portion provided on an outer circumferential side of the cylinder; and the plurality of branch channel portions branching from the annular channel portion. Thus, the symmetrical flow between the low pressure passage and the cylinder can be maintained. With the annular channel portion and the plurality of branch channel portions, the low pressure passage having a large passage cross-sectional area can be achieved. Thus, cavitation occurring on the downstream side of the low pressure valve in the operation of closing the low pressure valve is reduced, and pressure fluctuation (pressure spike) in the low pressure hydraulic line can be more effectively suppressed.
(6) In some embodiments, in any one of the configurations (1) to (5), the cam chamber includes: a main chamber portion surrounded by a cylinder block of the hydraulic machine; and a sub chamber portion formed between the cylinder and the cylinder block of the hydraulic machine on an outer circumferential side of the cylinder and at least partially within a range in the radial direction where the piston is to move reciprocally, and the first end of the low pressure passage opens to the sub chamber portion of the cam chamber.

In the configuration (6), with the sub chamber as a part of the cam chamber provided in at least a part of the reciprocating motion range of the piston in the radial direction, the cam chamber (sub chamber) can be disposed close to the low pressure valve, whereby an even shorter low pressure passage between the hydraulic chamber and the low pressure hydraulic line can be achieved.
(7) In some embodiments, in any one of the configurations (1) to (6), the low pressure valve includes a valve body and a valve seat on which the valve body is to seat, the hydraulic machine further comprises a low pressure seat-forming part which forms the valve seat of the low pressure valve on an outer circumferential side of the cylinder about a central axis of the hydraulic chamber and which supports a cylinder sleeve forming the cylinder such that the cylinder sleeve is movable pivotally in accordance with a rotation of the cam, and the low pressure passage is formed through the low pressure seat forming part.

In some hydraulic machines, a cylinder sleeve is configured to be pivotable in accordance with the rotation of a cam. In the hydraulic machine of this type, a gap is formed between the cylinder sleeve and a cylinder block to avoid interference between the cylinder sleeve in the pivoting motion and the cylinder block. The gap, formed between the cylinder sleeve and the cylinder block, and a space surrounded by the cylinder blocks integrally form a cam chamber.

In the configuration (7), the valve seat and the low pressure passage are formed in the low pressure seat-forming part that pivotally supports the cylinder sleeve, and the first end of the low pressure passage opens to the above-described gap forming a part of the cam chamber. Thus, an even shorter low pressure passage between the hydraulic chamber and the low pressure hydraulic line can be achieved.
(8) In some embodiments, in any one of the configurations (1) to (7), the low pressure valve includes a valve body, and the valve body has an opening for permitting working oil flowing between the high pressure valve and the hydraulic chamber to flow therethrough.

In the configuration (8), the low pressure valve can be positioned on radially inner side of the radial direction position of the high pressure valve. Thus, an even shorter low pressure passage can be achieved between the cylinder and the cam chamber. Furthermore, fluid force as a result of collision between the low pressure valve and the working oil flowing between the high pressure valve and the cylinder, can be suppressed from acting on the low pressure valve.

(9) In some embodiments, any one of the configurations (1) to (8) further includes a high pressure annular channel formed on an outer circumferential side of the high pressure valve about a central axis of the hydraulic chamber and being in communication with the high pressure hydraulic line.

In the configuration (9), with the high pressure annular channel thus provided on the outer circumferential side of the high pressure valve about the central axis of the hydraulic chamber, it is more likely to achieve a symmetrical flow between the high pressure hydraulic line and the hydraulic chamber, whereby the loss and pressure fluctuation due to asymmetrical flow can be suppressed.
(10) In some embodiments, in any one of the configurations (1) to (9), the low pressure valve includes a valve body and a flat valve seat on which the valve body is to seat, and the valve body has a portion to be in contact with the valve seat, the portion having a flat surface.

For example, an annular valve may be configured to be seated with an inner ridge, provided on an inner circumferential side of a valve body, and an outer ridge, provided on an outer circumferential side of the valve body. Seating of such an annular valve may not be ensured when the valve body deforms. For example, in the valve body of the annular valve having the inner ridge and the outer ridge, wearing might be uneven between the inner ridge and the outer ridge. When this happens, only one of the ridges is seated, and thus the closing of the valve may not be ensured.

With this regard, in the configuration (10), with the valve seat being flat and the at least the portion of the valve body to be in contact with the valve seat being a flat surface, even when the valve body deforms, the level of the deformation (for example, a wear amount) is less likely to be uneven. Thus, in the configuration (10), closing of the low pressure valve can be more easily ensured.
(11) In some embodiments, any one of the configurations (1) to (10) includes: a valve block accommodating the high pressure valve and the low pressure valve; and a cylinder block which at least partially forms the cam chamber. The valve block is mounted on the cylinder block.

In the configuration (11), the hydraulic machine can be assembled by mounting the valve block accommodating the high pressure valve and the low pressure valve to the cylinder block which at least partially forms the cam chamber, whereby the hydraulic machine can be assembled easily.
(12) A renewable energy type power generating apparatus according to one embodiment of the present invention includes: a rotor configured to receive a renewable energy to rotate; a hydraulic pump configured to be driven by rotation of the rotor; a hydraulic motor configured to be driven by a pressurized oil generated by the hydraulic pump; and an electric generator configured to be driven by the hydraulic motor. At least one of the hydraulic pump or the hydraulic motor is the hydraulic machine according to any one of claims 1 to 11. The high pressure hydraulic line connects an outlet of the hydraulic pump and an inlet of the hydraulic motor. The low pressure hydraulic line connects an outlet of the hydraulic motor and an inlet of the hydraulic pump.

In the configuration (12), the low pressure hydraulic line, communicable with the hydraulic chamber includes the cam chamber, and the hydraulic chamber communicates with the cam chamber forming at least a part of the low pressure hydraulic line, through the low pressure passage. Thus, for example, a shorter passage (the low pressure passage in the configuration (12)) between the hydraulic chamber and the low pressure hydraulic line can be achieved, compared with a configuration in which an internal flow path in the casing of the hydraulic machine communicates with the low-pressure external pipe (low pressure hydraulic line) connected to the outer surface of the casing. Thus, cavitation occurring on the downstream side of the low pressure valve in the operation of closing the low pressure valve is reduced, and pressure fluctuation (pressure spike) in the low pressure hydraulic line can be suppressed

With the pressure fluctuation in the low pressure hydraulic line suppressed as described above, an accumulator for reducing the pressure fluctuation in the low pressure hydraulic line can be omitted, whereby the hydraulic machine can have a simple configuration.

At least one embodiment of the present invention can provide a hydraulic machine and a renewable energy type power generating apparatus in which pressure fluctuation in a low pressure hydraulic line can be suppressed.

### BRIEF DESCRIPTION OF DRAWINGS

FIG. 1 is a schematic view of a wind turbine generator according to one embodiment;
FIG. 2 is a schematic view of a hydraulic machine according to one embodiment;
FIG. 3 is a diagram illustrating an example of a configuration around a hydraulic chamber of the hydraulic machine according to one embodiment;
FIG. 4 is a diagram illustrating an example of a configuration around the hydraulic chamber of the hydraulic machine according to one embodiment;
FIG. 5 is a diagram illustrating an example of a configuration around the hydraulic chamber of the hydraulic machine according to one embodiment;
FIG. 6 is a cross-sectional view of a sleeve supporting member illustrated in FIG. 3 taken along the line A-A; and
FIG. 7 is a cross-sectional view of a low pressure valve body illustrated in FIG. 3.

### DETAILED DESCRIPTION

Embodiments of the present invention will now be described in detail with reference to the accompanying drawings. It is intended, however, that unless particularly specified, dimensions, materials, shapes, relative positions, and the like of components described in the embodiments or illustrated in the accompanying drawings shall be interpreted as illustrative only and not limitative of the scope of the present invention.

First of all, a wind turbine generator employing a hydraulic machine (a hydraulic pump or a hydraulic motor) according to some embodiments will be described.

The wind turbine generator is described below as an example of a renewable energy type power generating apparatus. The renewable energy type power generating apparatus employing the hydraulic machine may be other renewable energy power generating apparatus such as, for example, apparatuses generating power on the basis of tidal current, ocean current, stream, and the like.

An apparatus employing the hydraulic machine according to some embodiments is not limited to the type of magnetic attraction power generating apparatus, and may be other apparatuses such as a construction machine for example.

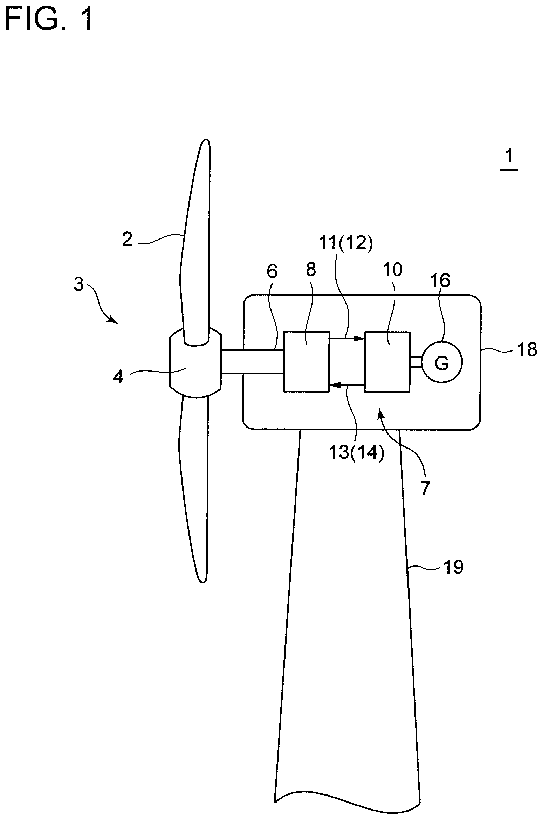

FIG. 1 is a schematic view of a wind turbine generator according to one embodiment.

As illustrated in FIG. 1, the wind turbine generator 1 includes: a rotor 3 configured to rotate by receiving wind as renewable energy; a hydraulic transmission 7 for transmitting the rotation of the rotor 3; and an electric generator 16 for generating power.

The rotor 3 includes at least one blade 2 and a hub 4 to which the blade 2 is attached.

The hydraulic transmission 7 includes: a hydraulic pump 8 coupled to the rotor 3 via a rotor shaft 6; a hydraulic motor 10; and a high pressure hydraulic line 12 and a low pressure hydraulic line 14 that connect the hydraulic pump 8 to the hydraulic motor 10.

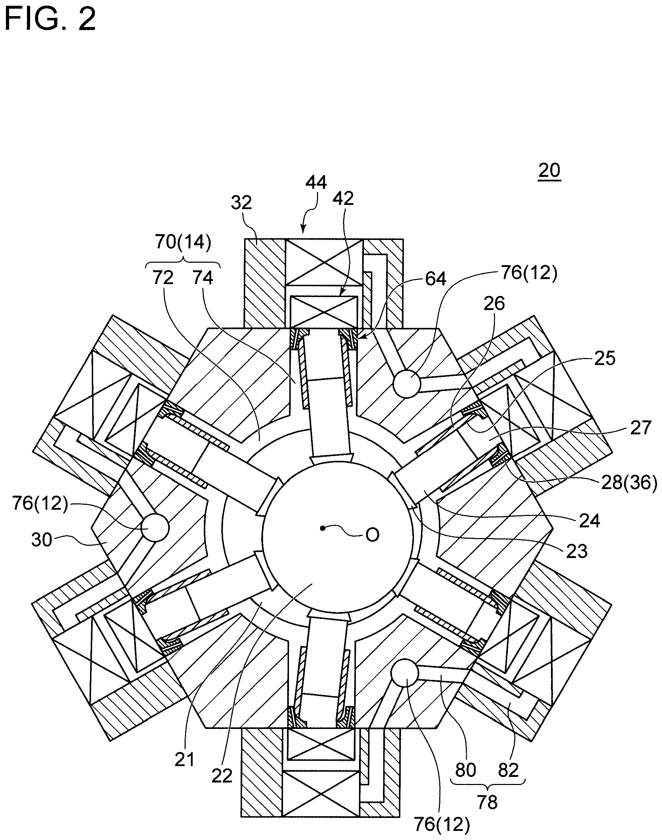

The high pressure hydraulic line 12 includes: a high-pressure external pipe 11 which connects an outlet of the hydraulic pump 8 to an inlet of the hydraulic motor 10; and a high-pressure internal flow passage 76 (described later, see FIG. 2) provided to a hydraulic machine (the hydraulic pump 8 or the hydraulic motor 10).

The low pressure hydraulic line 14 includes a low-pressure external pipe 13 which connects an outlet of the hydraulic motor 10 to an inlet of the hydraulic pump 8; and a cam chamber 70 (described later, see FIG. 2) provided to the hydraulic machine (the hydraulic pump 8 or the hydraulic motor 10).

The electric generator 16 is coupled to the hydraulic motor 10 via an output shaft of the hydraulic motor 10. In one embodiment, the electric generator 16 is a synchronous electric generator connected to a power grid and driven by the hydraulic motor 10.

The hydraulic pump 8, the hydraulic motor 10, and the electric generator 16 may be installed in a nacelle 18 provided on a tower 19.

In the wind turbine generator 1 illustrated in FIG. 1, rotational energy of the rotor 3 is input the electric generator 16 via the hydraulic transmission 7, including the hydraulic pump 8 and the hydraulic motor 10, and thus the power is generated by the electric generator 16.

When the blade 2 receives wind, the rotor 3 as a whole is rotated by the wind power, whereby the hydraulic pump 8 is driven by the rotor 3 to pressurize working oil, and thus higher pressure working oil (pressurised oil) is generated. The pressurised oil generated by the hydraulic pump 8 is supplied to the hydraulic motor 10 through the high pressure hydraulic line 12. The hydraulic motor 10 is driven by the pressurised oil. Then, the power is generated by the electric generator 16 connected to the hydraulic motor 10 via the output shaft. The working oil, having a low pressure after working in the hydraulic motor 10, flows into the hydraulic pump 8 again through the low pressure hydraulic line 14. The hydraulic pump 8 and the hydraulic motor 10 may be of a variable capacity type with an adjustable displacement volume.

In some embodiments, any one of the hydraulic pump 8 or the hydraulic motor 10 is the hydraulic machine described below.

Next, the hydraulic machine according to some embodiments is described.

FIG. 2 is a schematic view illustrating a configuration of a hydraulic machine 20 according to one embodiment. As illustrated in FIG. 2, the hydraulic machine 20 includes: a rotor shaft 21; a cylinder 25 provided along a radial direction of the rotor shaft 21; a piston 24 reciprocally movable in the cylinders 25; and a cam 22 which rotates together with the rotor shaft 21. In an exemplary embodiment illustrated in FIG. 2, a plurality of the cylinders 25 and the pistons 24 are arranged along a circumferential direction of the hydraulic machine 20.

In the specification "the radial direction of the rotor shaft 21" may be hereinafter simply referred to as a "radial direction".

The piston 24 forms a hydraulic chamber 27 together with the cylinder 25, and is provided so as to reciprocally move in the cylinder 25 along the radial direction while being guided by the cylinder 25.

In an embodiment illustrated in FIG. 2, a piston shoe 23 that contacts with a cam surface of the cam 22 is attached on and end of the piston 24 on a side of the cam 22, for smoothly converting the reciprocating motion of the piston 24 and rotating motion of the rotor shaft 21.

The cam 22 is provided in a cam chamber 70 that is at least partially position on a radially inner side of the cylinder 25, and rotates together with the rotor shaft 21 in accordance with the reciprocating motion of the piston 24.

In the embodiment illustrated in FIG. 2, the cam chamber 70 includes: a main chamber 72 surrounded by cylinder blocks 30 of the hydraulic machine 20; and sub chambers 74 formed between the cylinder 25 and the cylinder blocks 30, on an outer circumferential side of the cylinder 25. The cam 22 is provided in the main chamber 72 of the cam chamber 70 positioned on the radially inner side of the cylinder 25.

The main chamber 72 of the cam chamber 70 may extend in an axial direction of the hydraulic machine 20 on an inner circumferential side of the cylinder blocks 30.

The cylinder 25 is formed of a cylinder sleeve 26. In the exemplary embodiment illustrated in FIG. 2, the cylinder sleeve 26 is supported by a sleeve supporting member 28, attached to the cylinder block 30, in such a manner as to be pivotable in accordance with the rotation of the cam 22. The sleeve supporting member 28 may be provided with a holding member (not illustrated) that supports the cylinder sleeve 26 so as not to fall off from the sleeve supporting member 28.

In the embodiment illustrated in FIG. 2, the cam 22 is an eccentric cam that is provided while being eccentric with respect to an axial center O of the rotor shaft 21. The cam 22 and the rotor shaft 21 to which the cam 22 is attached make a single turn while the piston 24 reciprocates for a single time.

In other embodiments, the cam 22 may be an annular multilobed cam (ring cam) with a plurality of lobes (protrusions). In such a case, the piston 24 reciprocates for a number of time corresponding to the number of lobes, while the cam 22 and the rotor shaft 21 to which the cam 22 is attached make a single turn.

The cam chamber 70 forms the low pressure hydraulic line 14 communicable with the hydraulic chamber 27, together with the low-pressure external pipe 13 (see FIG. 1) described above. The cam chamber 70 (low pressure hydraulic line 14) can communicate with the hydraulic chamber 27 through a low pressure passage 64 described later.

A high-pressure internal flow passage 76 extending along an axial direction of the hydraulic machine 20 is formed in the cylinder block 30.

The high-pressure internal flow passage 76 forms the high pressure hydraulic line 12 communicable with the hydraulic chamber 27 together with the high-pressure external pipe 11 (see FIG. 1) described above. In the embodiment illustrated in FIG. 2, the hydraulic machine 20 is provided with a plurality of the high-pressure internal flow passages 76 arranged about the center O of the rotor shaft 21 at an angular interval. The high-pressure internal flow passages 76 are connected to the high-pressure external pipe 11 (see FIG. 1) through flow passage provided in an endplate (not illustrated) positioned at an end of the hydraulic machine 20 in the axial direction.

The high-pressure internal flow passage 76 (high pressure hydraulic line 12) can communicate with the hydraulic chamber 27 through a high-pressure communication passage 78 including: a first high-pressure passage 80 provided in the cylinder block 30; and a second high-pressure passage 82 provided in a valve block 32 that accommodates a low pressure valve 42 and a high pressure valve 44.

The hydraulic machine 20 includes: the high pressure valve 44 for switching a communication state between the hydraulic chamber 27 and the high pressure hydraulic line 12; and the low pressure valve 42 for switching the communication state between the hydraulic chamber 27 and the low pressure hydraulic line 14.

In the hydraulic machine 20 illustrated in FIG. 2, the high pressure valve 44 is provided between the cylinder 25 and the high-pressure internal flow passage 76 (high pressure hydraulic line 12). The low pressure valve 42 is disposed between the cylinder 25 and the cam chamber 70 (low pressure hydraulic line 14).

In the hydraulic machine 20 illustrated in FIG. 2, the low pressure valve 42 and the high pressure valve 44 are accommodated in the valve block 32 attached to the cylinder block 30.

In the hydraulic machine 20, it may be needed to ensure sealing between members on a high pressure side where a relatively high pressure working oil flows.

Thus, in the embodiment described in FIG. 2, the high-pressure internal flow passage 76 is formed in the cylinder block 30, and the high-pressure internal flow passage 76 and the hydraulic chamber 27 communicate with each other via the first high-pressure passage 80 provided in the cylinder block 30 and the second high-pressure passage 82 provided in the valve block 32. Thus, only a section between the cylinder block 30 and the valve block 32 needs to be sealed. The first high-pressure passage 80 and the second high-pressure passage 82 have relatively small diameter, and thus a seal ring with a relatively small diameter can be provided to a connection member therebetween. All things considered, in the mode illustrated in FIG. 2, the sealing can he relatively easily achieved for a high-pressure region.

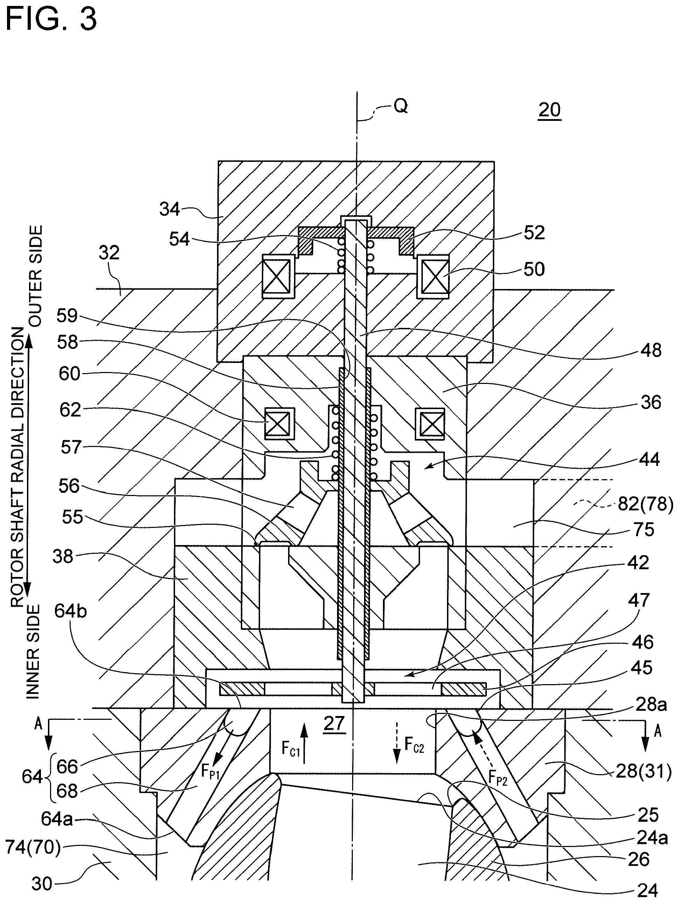

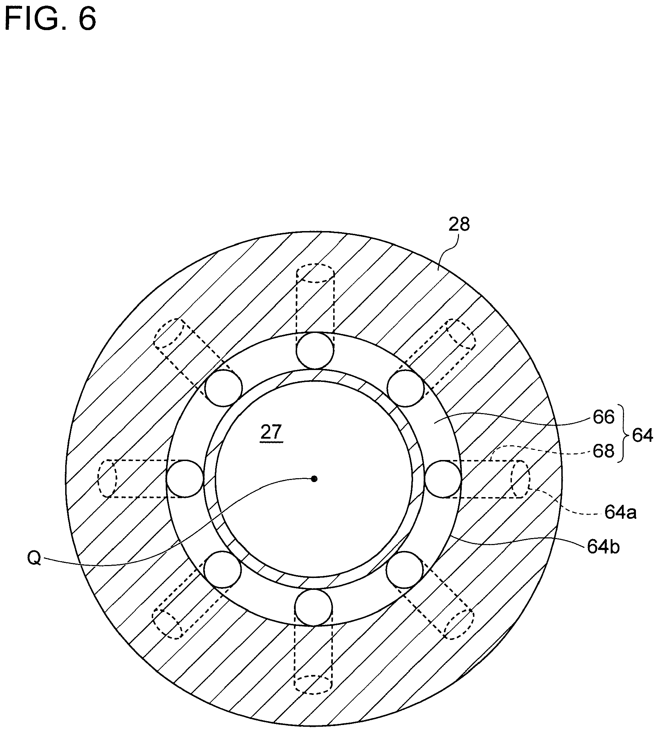

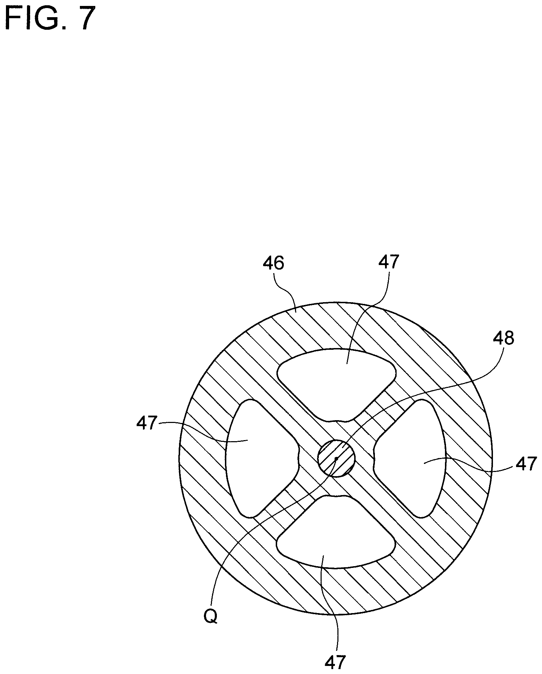

FIGS. 3 to 5 are each a diagram illustrating an example of a configuration around the hydraulic chamber 27 of the hydraulic machine 20 according to one embodiment. FIG. 6 is a cross-sectional view of the sleeve supporting member 28 (low pressure seat-forming part 31) illustrated in FIG. 3, taken along the line A-A. FIG. 7 is a cross-sectional view of the low pressure valve body 46 illustrated in FIG. 3, taken along a direction orthogonal to a central axis Q of the hydraulic chamber 27.

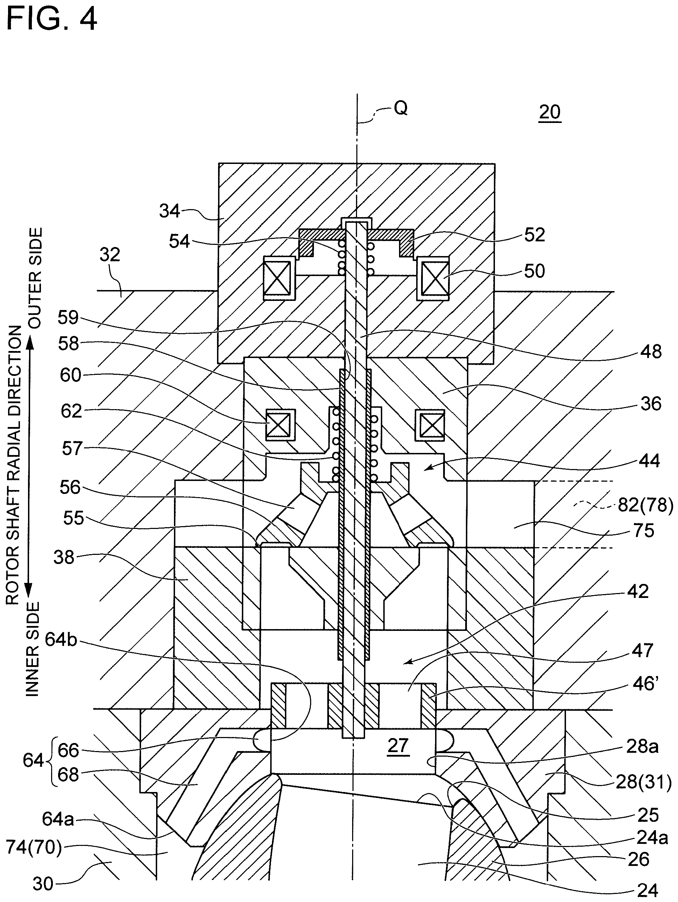

FIGS. 3 and 4 each illustrate an example of a configuration around the hydraulic chamber 27 of the hydraulic machine 20 described above.

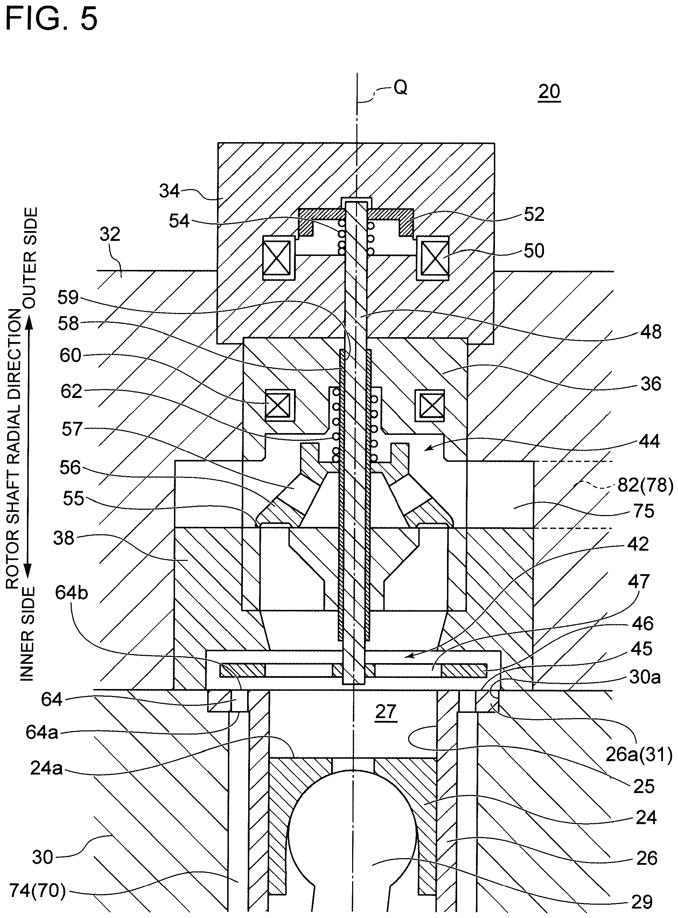

FIG. 5 illustrates an example of a configuration around the hydraulic chamber 27 of the hydraulic machine 20 which has a configuration which is similar to that described above, except for the configuration of the cylinder 25 and the piston 24. More specifically, the cylinder 25, in the hydraulic machine 20 illustrated in FIG. 5, is formed by the cylinder sleeve 26 fixed to the cylinder block 30. The cylinder sleeve 26 has an end portion, on the side opposite to the cam 22 (see FIG. 2), provide with a flange portion 26a in contact with a recess portion 30a formed on the cylinder block 30. A connecting rod 29 pivotally coupled to the piston 24 is provided between the piston 24 reciprocally movable in the cylinder 25 and the cam 22 (see FIG. 2). The reciprocating motion of the piston 24 or the rotating motion of the cam 22 is transmitted between the piston 24 and the cam 22 via the connecting rod 29.

In exemplary embodiments illustrated in FIGS. 3 to 5, the high pressure valve 44 of the hydraulic machine 20 is at least partially accommodated in the high pressure valve casing 36, and includes: a high pressure valve body 56; and a high pressure valve seat 55 on which the high pressure valve body 56 can be seated. The high pressure valve seat 55 is formed on the high pressure valve casing 36.

When the high pressure valve body 56 is seated on the high pressure valve seat 55 (when the high pressure valve 44 is closed), the hydraulic chamber 27 and the high-pressure internal flow passage 76 (high pressure hydraulic line 12) are in the non-communication state. When the high pressure valve body 56 is separated from the high pressure valve seat 55 (when the high pressure valve 44 is open), the hydraulic chamber 27 and the high-pressure internal flow passage 76 (high pressure hydraulic line 12) are in the communication state.

The high pressure valve 44 illustrated in FIGS. 3 to 5 is a solenoid valve which is configured to be capable of switching the communication state between the hydraulic chamber 27 and the high pressure hydraulic line 12 by using a first electromagnet 60. More specifically, the high pressure valve 44 is a normally closed valve including: a first biasing member 62 (a spring in the embodiment illustrated in FIGS. 3 to 5) that biases the high pressure valve body 56 toward the high pressure valve seat 55; and the first electromagnet 60 for driving the high pressure valve body 56. The first electromagnet 60 is configured to drive the high pressure valve body 56, against the biasing force of the first biasing member 62, with magnetic force. More specifically, when current is supplied to the first electromagnet 60, the first electromagnet 60 generates magnetic force so that the high pressure valve body 56 is pulled radially outward (in a valve opening direction). Thus, opening/closing of the high pressure valve 44 can be controlled with the magnetic attraction force acting on the high pressure valve body 56 adjusted by controlling current supply to the first electromagnet 60.

The high pressure valve 44 includes guide shaft 58 extending in the radial direction. The guide shaft 58 guides the movement of the high pressure valve body 56 in the radial direction (that is, the movement in the valve opening direction and the valve closing direction).

In the exemplary embodiment illustrated in FIG. 3 or FIG. 5, the low pressure valve 42 of the hydraulic machine 20 includes: a poppet low pressure valve body (the valve body according to the present invention) 46; and a low pressure valve seat (the valve seat according to the present invention) 45 on which the low pressure valve body 46 can be seated.

The low pressure valve seat 45 is formed by the low pressure seat-forming part 31. In the example illustrated in FIG. 3, the low pressure seat-forming part 31 includes the sleeve supporting member 28 attached to the cylinder block 30, and continues to first end (second end 64b) of the low pressure passage 64 formed in the sleeve supporting member 28. In the example illustrated in FIG. 5, the low pressure seat-forming part 31 includes a flange portion 26a of the cylinder sleeve 26 supported by the cylinder block 30, and continues to the first end (second end 64b) of the low pressure passage 64 formed in the flange portion 26a.

Thus, in the embodiment illustrated in FIG. 3 or FIG. 5, when the low pressure valve body 46 is seated on the low pressure valve seat 45 (when the low pressure valve 42 is closed), the hydraulic chamber 27 and the cam chamber 70 (low pressure hydraulic line 14) are in the non-communication state. When the low pressure valve body 46 is separated from the low pressure valve seat 45 (when the low pressure valve 42 is open), the hydraulic chamber 27 and the cam chamber 70 (low pressure hydraulic line 14) are in the communication state through the low pressure passage 64.

The sleeve supporting member 28, as the low pressure seat-forming part 31 where the low pressure valve seat 45 is formed, may be integrally formed with the cylinder block 30. The low pressure valve seat 45 may be formed on the sleeve supporting member 28 that is integrally formed with the cylinder block 30.

In the exemplary embodiment illustrated in FIG. 4, the low pressure valve 42 of the hydraulic machine 20 includes a cylindrical low pressure valve body (valve body according to the present invention) 46' provided on an inner circumference side of the sleeve supporting member 28. The low pressure valve body 46' is slidable on an inner circumference surface 28a of the sleeve supporting member 28. The first end (second end 64b) of the low pressure passage 64 provided between the cam chamber 70 and the hydraulic chamber 27 has an opening formed on the inner circumference surface 28a of the sleeve supporting member 28.

Thus, when the low pressure valve body 46' is at a radial direction position where the low pressure valve body 46' completely closes the first end (second end 64b) of the low pressure passage 64 (when the low pressure valve 42 is closed), the hydraulic chamber 27 and the cam chamber 70 (low pressure hydraulic line 14) are in the non-communication state. When the low pressure valve body 46' is at a radial direction position where the low pressure valve body 46' does not overlap with at least a part of the opening of the first end (second end 64b) of the low pressure passage 64 (when the low pressure valve 42 is open), the hydraulic chamber 27 and the cam chamber 70 (low pressure hydraulic line 14) are in the communication state through the low pressure passage 64.

The low pressure valve 42 illustrated in FIGS. 3 to 5 is a solenoid valve that can switch the communication state between the hydraulic chamber 27 and the low pressure hydraulic line 14 by using a second electromagnet 50 that is provided separately from the first electromagnet 60 described above. More specifically, the low pressure valve 42 is a normally opened solenoid valve including: a second biasing member 54 (a spring in the embodiment illustrated in FIGS. 3 to 5) that biases the low pressure valve body 46 or 46' in a direction of moving away from the low pressure valve seat 45 of the opening of the first end (second end 64b) of the low pressure passage 64 (that is, in the valve opening direction); and the second electromagnet 50 for driving the low pressure valve body 46 or 46'

The low pressure valve body 46 or 46' is coupled to one end side of a valve stem 48 extending along the radial direction, and an armature 52 is fixed to the second end of the valve stem 48. The second electromagnet 50 is configured to drive the low pressure valve body 46, against the biasing force of the second biasing member 54, with magnetic force.

Specifically, when current is supplied to the second electromagnet 50, the second electromagnet 50 generates the magnetic force with which the armature 52 is pulled toward the radially inner side (valve closing direction). The armature 52, the valve stem 48, and the low pressure valve body 46 or 46' are integrally moved in the radial direction in accordance with the magnetic attraction force. Thus, opening/closing of the low pressure valve 42 can be controlled with the magnetic attraction force acting on the armature 52 adjusted by the controlling the current supplied to the second electromagnet 50.

The valve stem 48 of the low pressure valve 42 is disposed through a through hole 59 formed through the guide shaft 58 of the high pressure valve 44 in the radial direction. Thus, the guide shaft 58 guides the movement of the valve stem 48 and the low pressure valve body 46 or 46' in the radial direction (the movement in the valve opening direction and the valve closing direction).

The low pressure valve 42 is at least partially accommodated in the low pressure valve casing 34. In the embodiment illustrated in FIGS. 3 to 5, the low pressure valve casing 34 accommodates a part of the valve stem 48, the second electromagnet 50, the armature 52, and the second biasing member 54.

In the embodiment illustrated in FIGS. 3 to 5, a bulkhead 38 is provided between the high pressure valve casing 36 and the cylinder block 30 in the hydraulic machine 20. The bulkhead 38 separates a high pressure region in which relatively high pressure working oil flows from a low pressure region in which relatively low pressure working oil flows.

In the embodiment illustrated in FIGS. 3 to 5, the hydraulic chamber 27 is a space that communicates with a region defined by the piston 24 and the cylinder 25, when the closed state of the high pressure valve 44 and the low pressure valve 42 is achieved in the hydraulic machine 20.

The central axis Q of the hydraulic chamber 27 is a central axis of a portion of the hydraulic chamber 27 defined by members which do not move with respect to the cylinder block 30. In the embodiment illustrated in FIGS. 3 and 4, the central axis Q of the hydraulic chamber 27 is a central axis of a portion of the hydraulic chamber 27 defined by members which do not move with respect to the cylinder block 30 (for example, members such as the sleeve supporting member 28 and the bulkhead 38 that does not pivot like the cylinder 25 and the piston 24). In the embodiment illustrated in FIG. 5, the members which do not move with respect to the cylinder block 30 include the cylinder sleeve 26, and the central axis Q of the hydraulic chamber 27 also serves as the central axis of the cylinder 25.

In the hydraulic machine 20 including the high pressure valve 44 and the low pressure valve 42 described above, the pressure in the hydraulic chamber 27 periodically changes in accordance with the reciprocating motion of the piston 24 due to the opening/closing operation on the high pressure valve 44 and the low pressure valve 42.

For example, when the hydraulic machine 20 is the hydraulic motor 10 (see FIG. 1), the piston 24 periodically reciprocates due to pressure difference between the high pressure hydraulic line 12 and the low pressure hydraulic line 14 caused by the hydraulic pump 8. Thus, a motor process, in which the piston 24 moves from the top dead point to the bottom dead point, and a discharge process, in which the piston 24 moves from the bottom dead portion to the top dead portion, are repeated. While the hydraulic motor 10 is operating, the volume of the hydraulic chamber 27 defined by the piston 24 and the inner wall surface of the cylinder 25 periodically changes. Specifically, in the hydraulic motor 10, the high pressure valve 44 opens and the low pressure valve 42 closes in the motor process, whereby the working oil flows into the hydraulic chamber 27 from the high pressure hydraulic line 12. In the discharge process, the high pressure valve 44 is closed and the low pressure valve 42 is opened, whereby the working oil that has worked in the hydraulic chamber 27 is sent to the low pressure hydraulic line 14.

The reciprocating motion of the piston 24 is caused by introducing the pressurised oil into the hydraulic chamber 27 in the manner described above, and is converted into the rotating motion of the cam 22. As a result, the rotor shaft 21 of the hydraulic machine 20 rotates together with the cam 22.

For example, when the hydraulic machine 20 is the hydraulic pump 8 (see FIG. 1), the piston 24 periodically reciprocates along the cam surface, in accordance with the rotation of the cam 22 together with the rotor shaft 21. Thus, a pump process in which the piston 24 moves from the bottom dead point to the top dead point; and an intake process in which the piston 24 moves from the top dead point to the bottom dead point are repeated. Thus, the volume of the hydraulic chamber 27 defined by the piston 24 and the inner wall surface of the cylinder 25 periodically changes. In the hydraulic pump 8, the high pressure valve 44 is closed and the low pressure valve 42 is opened in the intake process. Thus, the working oil flows into the hydraulic chamber 27 from the low pressure hydraulic line 14. In the pump process, the high pressure valve 44 is opened and the low pressure valve 42 is closed. Thus, the compressed working oil is sent to the high pressure hydraulic line 12 from the hydraulic chamber 27.

In this manner, the rotating motion of the cam 22, rotating together with the rotor shaft 21 of the hydraulic machine 20, is converted into the reciprocating motion of the piston 24. Thus, the volume of the hydraulic chamber 27 periodically changes, and the high pressure working oil (pressurised oil) is generated in the hydraulic chamber 27.

As illustrated in FIGS. 3 to 5, the hydraulic machine 20 includes the low pressure passage 64 having first end (first end) 64a opening to the cam chamber 70 and the second end (second end) 64b positioned on the side of the low pressure valve 42.

In the embodiment illustrated in FIGS. 3 and 4, the low pressure passage 64 is provided through the sleeve supporting member 28 as the low pressure seat-forming part 31. In the embodiment illustrated in FIG. 5, the low pressure passage is provided through the flange portion 26a of the cylinder sleeve 26.

In the embodiment illustrated in FIGS. 3 to 5, the first end 64a of the low pressure passage 64 opens to the sub chamber 74 (the sub chamber 74 formed between the cylinder 25 and the cylinder block 30 on the outer circumferential side of the cylinder 25) of the cam chamber 70.

The first end 64a of the low pressure passage 64 is at a radial direction position between the second end 64b of the low pressure passage 64 and the center O of the rotor shaft 21. Specifically, the first end 64a of the low pressure passage 64 is positioned on the inner circumferential side of the second end 64b of the low pressure passage 64 in the radial direction of the hydraulic machine 20.

In the hydraulic machine 20 including such a low pressure passage 64, the low pressure hydraulic line 14, communicable with the hydraulic chamber 27 includes the cam chamber 70, and the hydraulic chamber 27 communicates with the cam chamber 70 forming at least a part of the low pressure hydraulic line 14, through the low pressure passage 64.

Thus, for example, a shorter passage (the low pressure passage 64 in the embodiment illustrated in FIGS. 3 to 5) between the hydraulic chamber 27 and the low pressure hydraulic line 14 can be achieved, compared with a configuration in which an internal flow path in the casing of the hydraulic machine 20 communicates with the low-pressure external pipe 13 (low pressure hydraulic line 14) connected to the outer surface of the casing.

Thus, cavitation occurring on the downstream side of the low pressure valve 42 in the operation of closing the low pressure valve 42 is reduced, and pressure fluctuation (pressure spike) in the low pressure hydraulic line 14 can be suppressed.

With the pressure fluctuation in the low pressure hydraulic line 14 suppressed as described above, an accumulator for reducing the pressure fluctuation in the low pressure hydraulic line 14 can be omitted, whereby the hydraulic machine 20 can have a simple configuration.

In the exemplary embodiment illustrated in FIGS. 3 to 5, the low pressure valve body 46 is disposed farther in the radial direction from the cylinder 25 than the low pressure valve seat 45 or the opening at the first end (second end 64b) of the low pressure passage 64. For example, as illustrated in FIG. 3, in a region closer to the rotor shaft 21 than the low pressure valve seat 45 or the opening at the first end (second end 64b) of the low pressure passage 64, a flow Fc (Fc₁ or Fc₂) of the working oil, between the hydraulic chamber 27 and the low pressure valve 42, and a flow Fp (Fp₁ or Fp₂) of the working oil, in the low pressure passage 64, are opposite to each other in the radial direction.

For example, when the hydraulic machine 20 is the hydraulic motor 10, in a process in which the piston 24 moves from the bottom dead point to the top dead point, the high pressure valve 44 is closed and the low pressure valve 42 is opened. In this process, the working oil in the hydraulic chamber 27 is discharged to the cam chamber 70 (low pressure hydraulic line 14) through the low pressure passage 64.

Here, the flow Fc₁ (see FIG. 3) of the working oil between the hydraulic chamber 27 and the low pressure valve 42 is in a direction from the inner side toward the outer side in the radial direction. The flow Fp₁ (see FIG. 3) of the working oil in the low pressure passage 64 is in a direction from the outer side toward the inner side in the radial direction. Thus, the flow Fc₁ of the working oil between the hydraulic chamber 27 and the low pressure valve 42 and the flow Fp₁ of the working oil in the low pressure passage 64 are opposite to each other in the radial direction.

For example, when the hydraulic machine 20 is the hydraulic pump 8, in a process in which the piston 24 moves from the top dead point to the bottom dead point, the high pressure valve 44 is closed and the low pressure valve 42 is opened. Thus, the working oil in the cam chamber 70 (low pressure hydraulic line 14) flows into the hydraulic chamber 27 through the low pressure passage 64.

Here, the flow Fp₂ (see FIG. 3) of the working oil in the low pressure passage 64 is in a direction from the inner side toward the outer side in the radial direction. The flow Fc₂ (see FIG. 3) of the working oil between the hydraulic chamber 27 and the low pressure valve 42 is in a direction from the outer side toward the inner side in the radial direction. Thus, the flow Fc₂ of the working oil between the hydraulic chamber 27 and the low pressure valve 42 and the flow Fp₂ of the working oil in the low pressure passage 64 are opposite to each other in the radial direction.

As described above, the flow of the working oil toward the low pressure valve 42 from the hydraulic chamber 27 is reversed so that the working oil is guided toward the cam chamber 70 in the low pressure passage 64 as described above. Alternatively, the flow of the working flow flowing from the cam chamber 70 toward the low pressure valve 42 through the low pressure passage 64 is reversed so that the working oil is guided toward the hydraulic chamber 27. Thus, an even shorter low pressure passage 64 can be achieved between the hydraulic chamber 27 and the low pressure hydraulic line 14 (cam chamber 70). Thus, cavitation occurring on the downstream side of the low pressure valve 42 in the operation of closing the low pressure valve 42 is effectively reduced, and pressure fluctuation (pressure spike) in the low pressure hydraulic line 14 can be more effectively suppressed.

In the exemplary embodiment illustrated in FIG. 3 or FIG. 5, the low pressure valve seat 45 is provided on the outer circumferential side of the cylinder 25 about the central axis Q of the hydraulic chamber 27.

Thus, in the exemplary embodiment illustrated in FIG. 3, the low pressure valve seat 45 is provided on an outer circumferential side of a portion of the hydraulic chamber 27 formed by the inner circumference surface 28a of the sleeve supporting member 28, about the central axis Q.

With the low pressure valve seat 45 provided on the outer circumferential side of the cylinder 25 (or the above described portion of the hydraulic chamber 27), an attempt to achieve a symmetrical flow of the working oil, via the low pressure valve seat 45, about the central axis Q of the hydraulic chamber 27 is facilitated, whereby loss and pressure fluctuation due to asymmetrical flow can be suppressed.

In the exemplary embodiment illustrated in FIGS. 3 to 5, the low pressure passage 64 is provided so as to be symmetrical about the central axis Q of the hydraulic chamber 27.

In the embodiment illustrated in FIGS. 3 and 4, the low pressure passage 64 includes: an annular channel portion 66 provided on an outer circumferential side (or the outer circumferential side of the portion of the hydraulic chamber 27 formed by the inner circumference surface 28a of the sleeve supporting member 28) of the cylinder 25 about the central axis Q of the hydraulic chamber 27; and a plurality of branch channel portions 68 branching from the annular channel portion 66 and extending from the annular channel portion 66 toward the cam chamber 70.

In one embodiment, as illustrated in FIGS. 3 and 6, the annular channel portion 66 is provided to the sleeve supporting member 28 as the low pressure seat-forming part 31, on the outer circumferential side of the cylinder 25 (the outer circumferential side of the portion of the hydraulic chamber 27 formed by the inner circumference surface 28a of the sleeve supporting member 28). The annular channel portion 66 continues to the low pressure valve seat 45 having an annular shape, and forms the second end 64b as an end of the low pressure passage 64 on a side of the low pressure valve 42.

In the embodiment illustrated in FIGS. 3 and 6, the plurality of branch channel portions 68 branching from the annular channel portion 66 radially extend about the central axis Q of the hydraulic chamber 27, from the annular channel portion 66 toward the sub chamber 74 of the cam chamber 70.

In the embodiment illustrated in FIGS. 3 to 5, the low pressure passage 64 is provided so as to be symmetrical about the central axis Q of the hydraulic chamber 27. Thus, the symmetrical flow between the low pressure passage 64 and the hydraulic chamber 27 can be achieved, whereby the loss and the pressure fluctuation due to the asymmetrical flow can be suppressed.

In the embodiment illustrated in FIGS. 3 and 4, the low pressure passage 64 includes: the annular channel portion 66 provided on an outer circumferential side of the cylinder 25; and the plurality of branch channel portions 68 branching from the annular channel portion 66. Thus, the symmetrical flow between the low pressure passage 64 and the cylinder 25 can be maintained. With the annular channel portion 66 and the plurality of branch channel portions 68, the low pressure passage 64 having a large passage cross-sectional area can be achieved. Thus, cavitation occurring on the downstream side of the low pressure valve 42 in the operation of closing the low pressure valve 42 is reduced, and pressure fluctuation (pressure spike) in the low pressure hydraulic line 14 can be more effectively suppressed.

In the exemplary embodiment illustrated in FIGS. 3 to 5, as described above, the first end 64a of the low pressure passage 64 opens to the sub chamber 74 of the cam chamber 70 formed between the cylinder 25 and the cylinder block 30, on the outer circumferential side of the cylinder 25. The sub chamber 74 is formed at least partially within a range in the radial direction where the piston 24 is to move reciprocally in the radial direction. Alternatively, the sub chamber 74 is formed at least is a part of a range in which an upper surface 24a of the piston 24 partially defining the hydraulic chamber 27 is positioned, in the radial direction, while the piston 24 moves reciprocally.

With the sub chamber 74 as a part of the cam chamber 70 provided in at least a part of the reciprocating motion range of the piston 24 in the radial direction, the cam chamber 70 (sub chamber 74) can be disposed close to the low pressure valve 42, whereby an even shorter low pressure passage 64 between the hydraulic chamber 27 and the low pressure hydraulic line 14 can be achieved.

In an exemplary embodiment illustrates in FIGS. 3 and 4, the sleeve supporting member 28 is provided as the low pressure seat-forming part 31 as described above. The low pressure valve seat 45 is formed by the sleeve supporting member 28 on the outer circumferential side of the cylinder 25 about the central axis Q of the hydraulic chamber 27. The low pressure passage 64 having the first end 64a opened to the cam chamber 70 and the second end 64b positioned on the side of the low pressure valve 42 is provided through the sleeve supporting member 28 as the low pressure seat-forming part 31.

In the hydraulic machine 20 with the cylinder sleeve 26 configured to be pivotable as illustrated in FIGS. 3 and 4, the gap (the sub chamber 74) is formed between the cylinder sleeve 26 and the cylinder block 30 for avoiding the interference between the cylinder sleeve 26 in the pivoting motion and the cylinder block 30. The gap forms the cam chamber 70 together with the space (main chamber 72) surrounded by the cylinder blocks 30.

In this configuration, as described above, the low pressure valve seat 45 and the low pressure passage 64 are formed in the low pressure seat-forming part 31 that pivotally supports the cylinder sleeve 26, and the first end (the first end 64a) of the low pressure passage 64 opens to the above-described gap (sub chamber 74) forming a part of the cam chamber 70. Thus, an even shorter low pressure passage 64 between the hydraulic chamber 27 and the low pressure hydraulic line 14 can be achieved.

In the exemplary embodiment illustrated in FIGS. 3 to 5, the low pressure valve body 46 has an opening 47 for permitting working oil flowing between the high pressure valve 44 and the cylinder 25 to flow therethrough along the radial direction.

With the low pressure valve body 46 thus provided with the opening 47, the low pressure valve 42 can be positioned on radially inner side of the radial direction position of the high pressure valve 44. Thus, an even shorter low pressure passage 64 can be achieved between the cylinder 25 and the cam chamber 70. Furthermore, it is possible to suppress fluid force as a result of collision between the low pressure valve 42 and the working oil flowing between the high pressure valve 44 and the cylinder 25, acting on the low pressure valve 42.

In some embodiments, the low pressure valve body 46 may include a plurality of openings 47 provided at positions symmetrical about the central axis Q of the hydraulic chamber 27.

For example, the low pressure valve body 46 illustrated in FIG. 3 includes a plurality of (four in an example illustrated in FIG. 7) openings 47 provided at positions rotation symmetrical about the central axis Q of the hydraulic chamber 27, as illustrated in FIG. 7 (a cross-sectional view of the low pressure valve body 46).

With the plurality of openings 47 thus provided at the positions symmetrical about the central axis Q of the hydraulic chamber 27, an attempt to achieve a symmetrical flow of the working oil passing through the low pressure valve body 46 between the high pressure valve 44 and the cylinder 25 can be facilitated, whereby a loss and pressure fluctuation due to an asymmetrical flow can be suppressed.

In the exemplary embodiment illustrated in FIGS. 3 to 5, a high pressure annular channel 75 is provided on the outer circumferential side of the high pressure valve 44 about the central axis Q of the hydraulic chamber 27. The high pressure annular channel 75 communicates with the high pressure hydraulic line 12 via the high-pressure communication passage 78 (see FIG. 2) including the second high-pressure passage 82.

With the annular high pressure annular channel 75 thus provided on the outer circumferential side of the high pressure valve 44 about the central axis Q of the hydraulic chamber 27, an attempt to achieve a symmetrical flow between the high pressure hydraulic line 12 and the hydraulic chamber 27 can be facilitated, whereby the loss and pressure fluctuation due to asymmetrical flow can be suppressed.

In the exemplary embodiment illustrated in FIGS. 3 to 5, the low pressure valve seat 45 is flat, and the portion of the low pressure valve body 46 to be in contact with the low pressure valve seat 45 is a flat surface.

With the low pressure valve seat 45 being flat and the at least the portion of the low pressure valve body 46 to be in contact with the low pressure valve seat 45 being a flat surface as described above, even when the low pressure valve body 46 deforms, the level of the deformation (for example, a wear amount) is less likely to be uneven, whereby closing of the low pressure valve 42 can be more easily ensured.

The present invention is not limited to the embodiment described above, and includes a mode obtained by modifying the embodiment described above and modes obtained by appropriately combining these modes.

The expressions used herein that mean relative or absolute arrangement, such as "in a direction", "along a direction", "in parallel with", "orthogonal to", "center", "concentrically", and "coaxial" mean not only exactly what they refer to but also such states that are relatively displaced with a tolerance or by an angle or distance that is small enough to achieve the same level of functionality.

For example, the expressions used herein that mean things are equivalent to each other, such as "the same", "equivalent", and "uniform", mean not only exactly equivalent states but also such states that have a tolerance or a difference that is small enough to achieve the same level of functionality.

For example, expressions that represent shapes, such as quadrangles and cylindrical shapes, mean not only what they refer to in a geometrically strict sense but also shapes having some irregularities, chamfered portions, or the like that can provide the same level of functionality.

The expressions "including", "comprising", and "provided with" one component are not exclusive expressions that exclude other components.

## Claims

1. A hydraulic machine (20), comprising:
a rotor shaft (21);
a cylinder (25) provided along a radial direction of the rotor shaft (21);
a piston (24) forming a hydraulic chamber (27) together with the cylinder (25), the piston (24) being configured to be guided by the cylinder (25) so as to be reciprocally movable along the radial direction in the cylinder (25), and the hydraulic chamber (27) including a central axis (Q);
a cam (22) disposed in a cam chamber (70) which is located on an inner side in the radial direction with respect to the cylinder (25), the cam (22) being configured to rotate together with the rotor shaft (21) in conjunction with a reciprocating motion of the piston (24);
a low pressure hydraulic line (14) and a high pressure hydraulic line (12) which are respectively communicable with the hydraulic chamber (27) and an external high/low pressure pipe (11,13);
a low pressure valve (42) disposed between the cylinder (25) and the low pressure hydraulic line (14) for switching a communication state between the hydraulic chamber (27) and the low pressure hydraulic line (14); and
a high pressure valve (44) disposed between the cylinder (25) and the high pressure hydraulic line (12) for switching a communication state between the hydraulic chamber (27) and the high pressure hydraulic line (12),
**characterized in that**
the low pressure hydraulic line (14) includes the cam chamber (70),
the hydraulic machine (20) further comprises a low pressure passage (64) having a first end (64a) opening to the cam chamber (70) and a second end (64b) located on a side of the low pressure valve (42), and
the first end (64a) of the low pressure passage (64) is located at a radial position between a radial position of the second end (64b) of the low pressure passage (64) and a radial position of a center (O) of the rotor shaft (21).

2. The hydraulic machine (20) according to claim 1,
wherein the low pressure valve (42) includes a valve body (46;46') and a valve seat (45) on which the valve body (46;46') is to seat,
wherein the valve body (46;46') is located farther in the radial direction from the cylinder (25) than the valve seat (45), and
wherein the hydraulic machine (20) is configured such that in a region on a rotor shaft side of the valve seat (45), a radial component of a flow of working oil between the hydraulic chamber (27) and the low pressure valve (42) and a radial component of a flow of working oil through the low pressure passage (64) are opposite to each other in the radial direction.

3. The hydraulic machine (20) according to claim 1 or 2,
wherein the low pressure valve (42) includes a/the valve body (46;46') and a/the valve seat (45) on which the valve body (46;46') is to seat, and
wherein the valve seat (45) is disposed on an outer circumferential side of the cylinder (25) about the central axis (Q) of the hydraulic chamber (27).

4. The hydraulic machine (20) according to any one of claims 1 to 3,
wherein the low pressure passage (64) is provided so as to be symmetrical about the central axis (Q) of the hydraulic chamber (27).

5. The hydraulic machine (20) according to any one of claims 1 to 4,
wherein the low pressure passage (64) includes:
an annular channel portion (66) provided on an outer circumferential side of the cylinder (25) about the central axis (Q) of the hydraulic chamber (27); and
a plurality of branch channel portions (68) branching from the annular channel portion (66) and extending from the annular channel portion (66)c toward the cam chamber (70).

6. The hydraulic machine (20) according to any one of claims 1 to 5,
wherein the cam chamber (70) includes:
a main chamber portion (72) surrounded by a cylinder block (30) of the hydraulic machine (20); and
a sub chamber portion (74) formed between the cylinder (25) and the cylinder block (30) of the hydraulic machine (20) on an outer circumferential side of the cylinder (25) and at least partially within a range in the radial direction where the piston (24) is to move reciprocally, and
wherein the first end (64a) of the low pressure passage (64) opens to the sub chamber portion (74) of the cam chamber (70).

7. The hydraulic machine (20) according to any one of claims 1 to 6,
wherein the low pressure valve (42) includes a/the valve body (46;46') and a/the valve seat (45) on which the valve body (46;46') is to seat,
wherein the hydraulic machine (20) further comprises a low pressure seat-forming part (31) which forms the valve seat (45) of the low pressure valve (42) on an outer circumferential side of the cylinder (25) about the central axis (Q) of the hydraulic chamber (27) and which supports a cylinder sleeve (26) forming the cylinder (25) such that the cylinder sleeve (26) is movable pivotally in accordance with a rotation of the cam (22), and
wherein the low pressure passage (64) is formed through the low pressure seat forming part (31).

8. The hydraulic machine (20) according to any one of claims 1 to 7,
wherein the low pressure valve (42) includes a/the valve body (46;46'), and
wherein the valve body (46;46') has an opening (47) for permitting working oil flowing between the high pressure valve (44) and the hydraulic chamber (27) to flow therethrough.

9. The hydraulic machine (20) according to any one of claims 1 to 7, further comprising a high pressure annular channel (75) formed on an outer circumferential side of the high pressure valve (44) about the central axis (Q) of the hydraulic chamber (27) and being in communication with the high pressure hydraulic line (12).

10. The hydraulic machine (20) according to any one of claims 1 to 9,
wherein the low pressure valve (42) includes a/the valve body (46) and a/the flat valve seat (45) on which the valve body (46) is to seat, and
wherein the valve body (46) has a portion to be in contact with the valve seat (45), the portion having a flat surface.

11. The hydraulic machine (20) according to any one of claims 1 to 10, comprising:
a valve block (32) accommodating the high pressure valve (44) and the low pressure valve (42); and
a/the cylinder block (30) which at least partially forms the cam chamber (70),
wherein the valve block (32) is mounted on the cylinder block (30).

12. A renewable energy type power generating apparatus (1), comprising:
a rotor (3) configured to receive a renewable energy to rotate;
a hydraulic pump (8) configured to be driven by rotation of the rotor (3);
a hydraulic motor (10) configured to be driven by a pressurized oil generated by the hydraulic pump (8); and
an electric generator (16) configured to be driven by the hydraulic motor (10),
wherein at least one of the hydraulic pump (8) or the hydraulic motor (10) is the hydraulic machine (20) according to any one of claims 1 to 11,
wherein a high-pressure external pipe (11) connects an outlet of the hydraulic pump (8) and an inlet of the hydraulic motor (10), and
wherein a low-pressure external pipe (13) connects an outlet of the hydraulic motor (10) and an inlet of the hydraulic pump (8).

## Patentansprüche

1. Eine hydraulische Maschine (20) mit:
einer Rotorwelle (21),
einem Zylinder (25), der entlang einer Radialrichtung der Rotorwelle (21) vorgesehen ist,
einem Kolben (24), der zusammen mit dem Zylinder (25) eine hydraulische Kammer (27) bildet, wobei der Kolben (24) ausgestaltet ist, um durch den Zylinder (25) so geführt zu werden, dass er entlang der Radialrichtung in dem Zylinder (25) hin-und-her bewegbar ist, und wobei die hydraulische Kammer (27) eine zentrale Achse (Q) aufweist,
einem Nocken bzw. einer Steuerkurve (22), die in einer Steuerkurvenkammer (70) angeordnet ist, die sich an einer inneren Seite in der Radialrichtung bezüglich dem Zylinder (25) befindet, wobei die Steuerkurve (22) ausgestaltet ist, um zusammen mit der Rotorwelle (21) in Verbindung mit einer Hin-und-Her-Bewegung des Kolbens (24) zu rotieren,
einer Niederdruck-Hydraulikleitung (14) und einer Hochdruck-Hydraulikleitung (12), die jeweils mit der hydraulischen Kammer (27) und einem externen Hoch-/NiederDruckrohr (11,13) verbindbar sind,
einem Niederdruckventil (42), das zwischen dem Zylinder (25) und der Niederdruck-Hydraulikleitung (14) zum Umschalten eines Verbindungszustands zwischen der hydraulischen Kammer (27) und der Niederdruck-Hydraulikleitung (14) angeordnet ist, und
einem Hochdruckventil (44), das zwischen dem Zylinder (25) und der Hochdruck-Hydraulikleitung (12) zum Umschalten eines Verbindungszustands zwischen der hydraulischen Kammer (27) und der Hochdruck-Hydraulikleitung (12) angeordnet ist,
**dadurch gekennzeichnet, dass**
die Niederdruck-Hydraulikleitung (14) die Steuerkurvenkammer (70) aufweist,
die hydraulische Maschine (20) ferner einen Niederdruckdurchgang (64) mit einer Öffnung am ersten Ende (64a), die sich zu der Steuerkurvenkammer (70) öffnet, und einem zweiten Ende (64b), das sich an einer Seite des Niederdruckventils (42) befindet, aufweist, und
das erste Ende (64a) des Niederdruckdurchgangs (64) sich an einer radialen Position zwischen einer radialen Position des zweiten Endes (64b) des Niederdruckdurchgangs (64) und einer radialen Position einer Mitte (O) der Rotorwelle (21) befindet.

2. Die hydraulische Maschine (20) gemäß Anspruch 1,
wobei das Niederdruckventil (42) einen Ventilkörper (46;46') und einen Ventilsitz (45), auf dem der Ventilkörper (46;46') sitzen kann, aufweist,
wobei der Ventilkörper (46;46') sich weiter in der Radialrichtung von dem Zylinder (25) befindet als der Ventilsitz (45), und
wobei die hydraulische Maschine (20) so konfiguriert ist, dass in einem Bereich an einer Rotorwellenseite des Ventilsitzes (45) eine radiale Komponente einer Strömung von Arbeitsöl zwischen der hydraulischen Kammer (27) und dem Niederdruckventil (42) und eine radiale Komponente einer Strömung von Arbeitsöl durch den Niederdruckdurchgang (64) einander in der Radialrichtung entgegengesetzt sind.

3. Die hydraulische Maschine (20) gemäß Anspruch 1 oder 2, wobei das Niederdruckventil (42) einen/den Ventilkörper (46;46') und einen/den Ventilsitz (45), auf dem der Ventilkörper (46;46') sitzen kann, aufweist, und
wobei der Ventilsitz (45) an einer Außenumfangsseite des Zylinders (25) um die zentrale Achse (Q) der hydraulischen Kammer (27) herum angeordnet ist.

4. Die hydraulische Maschine (20) gemäß einem der Ansprüche 1 bis 3,
wobei der Niederdruckdurchgang (64) so vorgesehen ist, dass er um die zentrale Achse (Q) der hydraulischen Kammer (27) symmetrisch ist.

5. Die hydraulische Maschine (20) gemäß einem der Ansprüche 1 bis 4,
wobei der Niederdruckdurchgang (64) aufweist:
einen ringförmigen Kanalabschnitt (66), der an einer Außenumfangsseite des Zylinders (25) um die zentrale Achse (Q) der hydraulischen Kammer (27) herum vorgesehen ist, und
eine Vielzahl von Zweigkanalabschnitten (68), die von dem ringförmigen Kanalabschnitt (66) verzweigen und sich von dem ringförmigen Kanalabschnitt (66) zu der Steuerkurvenkammer (70) erstrecken.

6. Die hydraulische Maschine (20) gemäß einem der Ansprüche 1 bis 5,
wobei die Steuerkurvenkammer (70) aufweist:
einen Hauptkammerabschnitt (72), der von einem Zylinderblock (30) der hydraulischen Maschine (20) umgeben ist, und
einen Nebenkammerabschnitt (74) der zwischen dem Zylinder (25) und dem Zylinderblock (30) der hydraulischen Maschine (20) an einer Außenumfangsseite des Zylinders (25) zumindest teilweise in einem Bereich in der Radialrichtung, wo der Kolben (24) sich hin- und her bewegt, ausgebildet ist, und
wobei das erste Ende (64a) des Niederdruckdurchgangs (64) sich zu dem Nebenkammerabschnitt (74) der Steuerkurvenkammer (70) öffnet.

7. Die hydraulische Maschine (20) gemäß einem der Ansprüche 1 bis 6,
wobei das Niederdruckventil (42) einen/den Ventilkörper (46;46') und einen/den Ventilsitz (45), auf dem der Ventilkörper (46;46') sitzen kann, aufweist,
wobei die hydraulische Maschine (20) ferner ein Niederdrucksitz-Bildungsteil (31) aufweist, das den Ventilsitz (45) des Niederdruckventils (42) an einer Außenumfangsseite des Zylinders (25) um die zentrale Achse (Q) der hydraulischen Maschine (27) herum ausbildet und das eine Zylinderhülse (26) trägt, die den Zylinder (25) bildet, sodass die Zylinderhülse (26) schenkbar gemäß einer Rotation der Steuerkurve (22) bewegbar ist, und
wobei der Niederdruckdurchgang (64) durch den Niederdrucksitz-Bildungsteil (31) ausgebildet ist.

8. Die hydraulische Maschine (20) gemäß einem der Ansprüche 1 bis 7,
wobei das Niederdruckventil (42) einen/den Ventilkörper (46;46') aufweist, und
wobei der Ventilkörper (46;46') eine Öffnung (47) hat, zum Zulassen, dass Arbeitsöl, das zwischen dem Hochdruckventil (44) und der hydraulischen Kammer (27) strömt, durch dieses hindurch strömt.

9. Die hydraulische Maschine (20) gemäß einem der Ansprüche 1 bis 7, ferner mit einem ringförmigen Hochdruckkanal (75), der an einer Außenumfangsseite des Hochdruckventils (44) um die zentrale Achse (Q) der hydraulischen Kammer (27) herum ausgebildet ist und der in Verbindung mit der Hochdruck-Hydraulikleitung (12) ist.

10. Die hydraulische Maschine (20) gemäß einem der Ansprüche 1 bis 9,
wobei das Niederdruckventil (42) einen/den Ventilkörper (46) sich und einen/den flachen Ventilsitz (45), auf dem der Ventilkörper (46) sitzen kann, aufweist, und
wobei der Ventilkörper (46) einen Abschnitt hat, der in Kontakt mit dem Ventilsitz (45) sein kann, wobei der Abschnitt eine flache Oberfläche besitzt.

11. Die hydraulische Maschine (20) gemäß einem der Ansprüche 1 bis 10, mit:
einem Ventilblock (32), der das Hochdruckventil (44) und das Niederdruckventil (42) aufnimmt, und
einem/dem Zylinderblock (30), der zumindest teilweise die Steuerkurvenkammer (70) bildet,
wobei der Ventilblock (32) an dem Zylinderblock (30) angebracht ist.

12. Eine Vorrichtung zum Erzeugen von Storm aus erneuerbarer Energie (1), mit:
einem Rotor (3), der konfiguriert ist, um eine erneuerbare Energie zur Rotation zu empfangen,
einer hydraulischen Pumpe (8), die konfiguriert ist, um durch Rotation des Rotors (3) angetrieben zu werden,
einem hydraulischen Motor (10), der konfiguriert ist, um durch ein durch die hydraulische Pumpe (8) erzeugtes Drucköl angetrieben zu werden, und
einem elektrischen Generator (16), der konfiguriert ist, um durch den hydraulischen Motor (10) angetrieben zu werden,
wobei zumindest eine von der hydraulischen Pumpe (8) oder dem hydraulischen Motor (10) die hydraulische Maschine (20) gemäß einem der Ansprüche 1 bis 11 ist,
wobei ein externes Hochdruckrohr (11) einen Auslass der hydraulischen Pumpe (8) und einen Einlass des hydraulischen Motors (10) verbindet, und
wobei ein externes Niederdruckrohr (13) einen Auslass des hydraulischen Motors (10) und einen Einlass der hydraulischen Pumpe (8) verbindet.

## Revendications

1. Machine (20) hydraulique, comprenant :
un arbre (21) de roue ;
un cylindre (25) prévu suivant une direction radiale de l'arbre (21) de la roue ;
un piston (24) formant une chambre (27) hydraulique ensemble avec le cylindre (25), le piston (24) étant configuré pour être guidé par le cylindre (25) de manière à aller et venir dans la direction radiale dans le cylindre (25) et la chambre (27) hydraulique comprend un axe (Q) central ;
une came (22) disposée dans une chambre (70) à came, qui est placée d'un côté intérieur dans la direction radiale par rapport au cylindre (25), la came (22) étant configurée pour tourner ensemble avec l'arbre (21) de la roue en conjonction avec un mouvement d'aller et retour du piston (24) ;
une ligne (14) hydraulique basse pression et une ligne (12) hydraulique haute pression, qui peuvent communiquer respectivement avec la chambre (27) hydraulique et avec un conduit (11, 13) extérieur haute/basse pression ;
un robinet (42) basse pression montée entre le cylindre (25) et la ligne (14) hydraulique basse pression pour interrompre un état de communication entre la chambre (27) hydraulique et la ligne (14) hydraulique basse pression et
un robinet (44) haute pression montée entre le cylindre (25) monté entre le cylindre (25) et la ligne (12) hydraulique haute pression pour interrompre un état de communication entre la chambre (27) hydraulique et la ligne (12) hydraulique haute pression,
**caractérisée en ce que**
la ligne (14) hydraulique basse pression comprend la chambre (70) à came,
la machine (20) hydraulique comprend, en outre, un passage (64) basse pression ayant une première extrémité (64a) débouchant sur la chambre (70) à came et une seconde extrémité (64b) placée d'un côté du robinet (42) basse pression et
la première extrémité (64a) du passage (64) basse pression est placée en une position radiale entre une position radiale de la seconde extrémité (64b) du passage (64) basse pression et une position radiale d'un centre (O) de l'arbre (21) de la roue.

2. Machine (20) hydraulique suivant la revendication 1,
dans laquelle le robinet (42) basse pression comprend un obturateur (46; 46') de robinet et un siège (45) de robinet, sur lequel vient l'obturateur (46, 46') de robinet,
dans laquelle l'obturateur (46; 46') de robinet est, dans la direction radiale, placé plus loin du cylindre (25) que le siège (45) du robinet et
dans laquelle la machine (20) hydraulique est configurée de manière à ce que, dans une région d'un côté de l'arbre de la roue du siège (45) du robinet, une composante radiale d'un écoulement d'huile de travail entre la chambre (27) hydraulique et le robinet (42) basse pression et une composante radiale d'un écoulement d'huile de travail passant dans le passage (64) basse pression soient opposées l'une à l'autre dans la direction radiale.

3. Machine (20) hydraulique suivant la revendication 1 ou 2,
dans laquelle le robinet (42) basse pression comprend un/l'obturateur (46; 46') de robinet et un/le siège (45) de robinet sur lequel vient l'obturateur (46; 46') de robinet et
dans laquelle le siège (45) de robinet est disposé d'un côté circonférentiel extérieur du cylindre (25) autour de l'axe (Q) central de la chambre (27) hydraulique.

4. Machine (20) hydraulique suivant l'une quelconque des revendications 1 à 3,
dans laquelle le passage (64) basse pression est prévu de manière à être symétrique autour de l'axe (Q) central de la chambre (27) hydraulique.

5. Machine (20) hydraulique suivant l'une quelconque des revendications 1 à 4,
dans laquelle le passage (64) basse pression comprend :
une partie (66) annulaire de canalisation prévue d'un côté circonférentiel extérieur du cylindre (25) autour de l'axe (Q) central de la chambre (27) hydraulique et
une pluralité de parties (68) de canalisation de dérivation bifurquant de la partie (66) annulaire de canalisation et s'étendant de la partie (66) annulaire de canalisation vers la chambre (70) à came.

6. Machine (20) hydraulique suivant l'une quelconque des revendications 1 à 5,
dans laquelle la chambre (70) à came comprend :
une partie (72) principale de chambre entourée d'un bloc cylindre (30) de la machine (20) hydraulique et
une sous-partie (74) de chambre formée entre le cylindre (25) et le bloc cylindre (30) de la machine (20) hydraulique d'un côté circonférentiel extérieur du cylindre (25) et, au moins en partie, dans une plage dans la direction radiale où le piston (24) va et vient et
dans laquelle la première extrémité (64a) du passage (64) basse pression débouche sur la sous-partie (74) de la chambre (70) à came.

7. Machine (20) hydraulique suivant l'une quelconque des revendications 1 à 6,
dans laquelle le robinet (42) basse pression comprend un/l'obturateur (46; 46') et un/le siège (45) de robinet, sur lequel vient l'obturateur (46; 46') de robinet,
dans laquelle la machine (20) hydraulique comprend, en outre, une partie (31) formant siège basse pression, qui forme le siège (45) du robinet (42) basse pression d'un côté circonférentiel extérieur du cylindre (25) autour de l'axe (Q) central de la chambre (27) hydraulique et qui supporte un manchon (26) de cylindre formant le cylindre (25), de manière à ce que le manchon (26) de cylindre puisse se déplacer en pivotant conformément à une rotation de la came (22) et
dans laquelle le passage (64) basse pression est formé dans la partie (31) formant siège basse pression.

8. Machine (20) hydraulique suivant l'une quelconque des revendications 1 à 7,
dans laquelle le robinet (42) basse pression comprend un/l'obturateur (46; 46') de robinet et
dans laquelle l'obturateur (46; 46') de robinet a une ouverture (47) pour permettre à de l'huile de travail, s'écoulant entre le robinet (44) haute pression et la chambre (27) hydraulique, d'y passer.

9. Machine (20) hydraulique suivant l'une quelconque des revendications 1 à 7, comprenant, en outre, une canalisation (75) annulaire haute pression formée d'un côté circonférentiel extérieur du robinet (44) haute pression autour de l'axe (Q) central de la chambre (27) hydraulique et en communication avec la ligne (12) hydraulique haute pression.

10. Machine (20) hydraulique suivant l'une quelconque des revendications 1 à 9,
dans laquelle le robinet (42) basse pression comprend un/l'obturateur (46) de robinet et un/le siège (45) de robinet plan, dans lequel vient l'obturateur (46) de robinet et
dans laquelle l'obturateur (46) de robinet a une partie destinée à être en contact avec le siège (45) de robinet, la partie ayant une surface plane.

11. Machine (20) hydraulique suivant l'une quelconque des revendications 1 à 10, comprenant
un bloc (32) de robinet, dans lequel est logé le robinet (44) haute pression et le robinet (42) basse pression et
un/le bloc cylindre (30), qui forme, au moins en partie, la chambre (70) à came,
dans laquelle le bloc (32) de robinet est monté sur le bloc cylindre (30).

12. Installation (1) de production de courant électrique de type à énergie renouvelable, comprenant :
une roue (3) configurée pour recevoir une énergie renouvelable, afin de tourner ;
une pompe (8) hydraulique configurée pour être entraînée par la rotation de la roue (3) ;
un moteur (10) hydraulique configuré pour être entraîné par une huile sous pression produite par la pompe (8) hydraulique et
une génératrice (16) électrique configurée pour être entraînée par le moteur (10) hydraulique,
dans laquelle au moins l'un de la pompe (8) hydraulique ou du moteur (10) hydraulique est la machine (20) hydraulique suivant l'une quelconque des revendications 1 à 11,
dans laquelle un conduit (11) extérieur haute pression relie une sortie de la pompe (8) hydraulique et une entrée du moteur (10) hydraulique et
dans laquelle un conduit (13) extérieur basse pression relie une sortie du moteur (10) hydraulique et une entrée de la pompe (8) hydraulique.
